# EUROPÄISCHE PATENTANMELDUNG

(11) **EP 3 693 566 A1**
(43) Veröffentlichungstag der Anmeldung: **12.08.2020**
(21) Anmeldenummer: 19156245.3
(22) Anmeldetag: 08.02.2019
(51) Int. Cl.: F01P 3/02

(54) **ZYLINDERANORDNUNG FÜR EINEN GROSSMOTOR SOWIE KÜHLVERFAHREN**

(71) Anmelder: Winterthur Gas & Diesel AG, 8401 Winterthur (CH)
(72) Erfinder: Strödecke, Daniel, 8400 Winterthur (CH); Balsiger, Uros, 8482 Sennhof (CH)
(74) Vertreter: Intellectual Property Services GmbH

(57) **Zusammenfassung**

Die Erfindung betrifft eine Zylinderanordnung (1) für einen Grossmotor, mit einer Zylinderlaufbuchse (2), sowie einem Zylinderdeckel (3). Die Zylinderanordnung (1) besitzt einen Kühlkreislauf (100), welcher derart mit einem ersten Kühleingang (E1), einem zweiten Kühleingang (E2), einem ersten Kühlausgang (A1) und einem zweiten Kühlausgang (A2) verbunden ist, dass ein Kühlfluid vom ersten Kühlausgang (A1) zum ersten Kühleingang (E1) und zum zweiten Kühleingang (E2) führbar ist, wobei im Kühlkreislauf (100) zwischen dem ersten Kühlausgang (A1) und dem ersten Kühleingang (E1) ein ansteuerbares Mischventil (V1) angeordnet ist. Im Kühlkreislauf (100) ist eine Zirkulationspumpe (P1) zwischen dem Mischventil (V1) und dem ersten Kühleingang (E1) zur Rezirkulation des Kühlfluids vom ersten Kühlausgang (A1) zum ersten Kühleingang (E1) angeordnet. Das Mischventil (V1) ist mit der Zirkulationspumpe (P1), dem ersten Kühlausgang (A1) und einer Kühlfluidzufuhr (5) zur Zufuhr von frischem Kühlfluid strömungsverbunden, wobei das Mischventil (V1) derart ausgestaltet ist, dass eine rezirkulierbare Menge des Kühlfluids einstellbar ist.

## Beschreibung

Die Erfindung betrifft eine Zylinderanordnung für einen Grossmotor, sowie einen Grossmotor mit einer erfindungsgemässen Zylinderanordnung und ein Verfahren zur Kühlung eines Grossmotors mit einer erfindungsgemässen Zylinderanordnung.

Grossmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betreib, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien. Grossmotoren haben typischerweise Zylinder, deren Innendurchmesser (Bohrung) mindestens 200 mm beträgt. Heutzutage werden Grossmotoren mit einer Bohrung von bis zu 1000 mm oder sogar noch mehr eingesetzt.

Es sind verschiedene Arten von Grossmotoren bekannt, die jeweils als Zweitakt- oder als Viertakt-Motoren ausgestaltet sein können. Unter den Aspekten des wirtschaftlichen und effizienten Betriebs, der Einhaltung von Abgasgrenzwerten und der Verfügbarkeit von Ressourcen sucht man auch nach Alternativen zum klassischerweise als Brennstoff für Grossmotoren verwendeten Schweröl. Dabei werden sowohl flüssige Brennstoffe eingesetzt, also Brennstoffe, die im flüssigen Zustand in den Brennraum eingebracht werden, als auch gasförmige Brennstoffe, also Brennstoffe, die im gasförmigen Zustand in den Brennraum eingebracht werden.

Beispiele für flüssige Brennstoffe sind Schweröl, Kerosin, Diesel und Benzin unterschiedlichster Qualitätsstufen, Alkohole, insbesondere Methanol oder Ethanol, biologisch hergestellte Brennstoffe ("bio fuel"), z. B. als FAME, zum Teil den vorgenannten konventionellen Brennstoffen beigemischt oder auch Emulsionen oder Suspensionen. So ist es z. B. bekannt, die als MSAR (Multiphase Superfine Atomised Residue) bezeichneten Emulsionen als Brennstoff zu verwenden. Eine bekannte Suspension ist diejenige aus Kohlenstaub und Wasser, die ebenfalls als Brennstoff für Grossmotoren eingesetzt wird. Als gasförmige Brennstoffe sind beispielsweise Erdgase wie LNG (liquefied natural gas), Ethan und Propan, z. B. in der Mischung als LPG bekannt.

Eine ebenfalls bekannte Alternative zum reinen Betrieb mit Schweröl oder einem anderen erdölbasierten Brennstoff ist es, Grossmotoren so auszugestalten, dass sie mit zwei oder noch mehr unterschiedlichen Brennstoffen betrieben werden können, wobei der Motor je nach Betriebssituation oder Umgebung entweder mit dem einen Brennstoff oder mit dem anderen Brennstoff betrieben wird. Ein solcher Grossmotor, der auch als Multi-Fuel Grossmotor bezeichnet wird, kann während des Betriebs von einem ersten Modus, in welchem ein erster Brennstoff verbrannt wird, in einen zweiten Modus, in welchem ein zweiter Brennstoff verbrannt wird, umgeschaltet werden und umgekehrt. Ferner kann es auch möglich sein, den Grossmotor gleichzeitig mit beiden Brennstoffen zu betreiben. Dabei können beispielsweise in einen oder mehrere Zylinder sowohl der erste als auch der zweite Brennstoff eingespritzt werden, sodass der Verbrennungsprozess sowohl auf der Verbrennung des ersten Brennstoffs als auch auf der Verbrennung des zweiten Brennstoffs beruht ("fuel sharing"). Es ist aber auch möglich, dass eine erste Anzahl von Zylindern nur mit dem ersten Brennstoff betrieben wird, während gleichzeitig eine zweite Anzahl von Zylindern nur mit dem zweiten Brennstoff betrieben wird

Eine bekannte Ausgestaltung eines Grossmotors, der mit zwei unterschiedlichen Brennstoffen betrieben werden kann, ist der Motorentyp, für den heutzutage der Begriff "Dual-Fuel Motor" gebräuchlich ist. Diese Motoren sind einerseits in einem Gasmodus betreibbar, in welchem ein gasförmiger Brennstoff, z.B. Erdgas, Methan, Ethan, Propan, oder leichtentzündliche Flüssigbrennstoffe (low flashpoint liquid LFL), wie Methanol, Ethanol, LPG oder DME, zur Verbrennung in den Brennraum eingebracht wird, und andererseits in einem Flüssigmodus, in welchem ein flüssiger Brennstoff wie Schweröl oder ein anderer flüssiger Brennstoff in demselben Motor verbrannt werden können. Ferner ist es auch möglich den Dual-Fuel Motor in einem Mischmodus zu betreiben, in welchem beide Brennstoffe gleichzeitig zur Anwendung kommen. Diese Grossmotoren können dabei sowohl Zweitakt- als auch Viertaktmotoren sein, insbesondere auch längsgespülte Zweitakt-Grossdieselmotoren.

Bekanntermassen sind die Belastungen, denen die Zylinderlaufbuchse, die auch als Zylinderliner bezeichnet wird, im Betriebszustand ausgesetzt ist, im oberen Bereich der Zylinderlaufbuchse, also dort, wo der Kolben in der Nähe des Zylinderdeckels im Betriebszustand den oberen Totpunkt durchläuft, besonders gross. In der Nähe der oberen Totpunkt Position des Kolbens, also wenn das von Zylinderlaufbuchse, Zylinderdeckel und Kolben eingeschlossene Volumen des Brennraums ungefähr minimal ist, wird ein Luft Brennstoffgemisch gezündet, oder es entzündet sich selbst. Es wirken dadurch hohe Temperaturen und Drücke in der Zylinderlaufbuchse, die zudem nicht zuletzt aufgrund der Bewegung des Kolbens und des sich damit ständig verändernden Volumens des Brennraums auch starken dynamischen Änderungen unterliegen.

Daher ist es seit langem bekannt am oberen Ende der Zylinderlaufbuchse in der Nähe des Zylinderdeckels beispielweise Kühlringe vorzusehen, die bevorzugt mit einer Wasserkühlung ausgestattet sind, so dass zumindest ein Teil der entstehenden Wärmebelastungen über den Kühlring von der Zylinderlaufbuchse wegführbar ist. Dadurch, dass im oberen Bereich der Zylinderlaufbuchse und damit natürlich auch am Zylinderdeckel der weitaus grösste Teil der im Zylinder erzeugten Wärme anfällt, ist die Temperatur im oberen Bereich der Zylinderlaufbuchse bei den aus dem Stand der Technik bekannten Zylinderanordnungen deutlich höher als im unteren Bereich der Zylinderlaufbuchse. Das heisst, dass bei den aus dem Stand der Technik bekannten Zylinderlaufbuchsen entlang der Zylinderachse ein massiver Temperaturgradient in der Zylinderwand der Zylinderlaufbuchsen herrscht. Oder anders ausgedrückt, im oberen Bereich der Wand der Zylinderlaufbuchse, insbesondere angrenzend an den Zylinderdeckel, ist die Temperatur im Vergleich zu einem wünschenswerten mittleren Temperaturwert zu hoch, während die Temperatur im unteren Bereich der Zylinderlaufbuchse vergleichsweise zu niedrig ist.

Das hat gleich mehrere, ganz verschiedene negative Auswirkungen, die dem Fachmann an sich bestens bekannt sind. Aufgrund der deutlich unterschiedlichen Temperaturen in unterschiedlichen Bereichen der Wand der Zylinderlaufbuchse kommt es natürlich zu entsprechenden inneren mechanischen Verzerrungen. So dehnt sich zum Beispiel die Zylinderlaufbuchse im oberen Bereich in der Nähe des Zylinderdeckels radial stärker als im unteren Bereich, wenn keine zusätzlichen Massnahmen getroffen werden. Das heisst, es besteht die Gefahr, dass im Betriebszustand des Grossmotors der innere Durchmesser im oberen Bereich grösser ist als im unteren Bereich der Zylinderlaufbuchse. Das hat nicht nur die an sich bekannten Nachteile für das Kolbenlaufverhalten des Kolbens und somit auch eine erhöhte Reibung zwischen Kolben und Linerlauffläche zur Folge, sondern erzeugt natürlich auch entsprechende inneren Verspannungen im Material der Zylinderlaufbuchse, sowohl in radialer Richtung als auch in Bezug auf die axiale Richtung entlang der Zylinderachse. Grosse Temperaturgradienten führen natürlich auch zu beschleunigten bzw. zu intensiveren und ungleichmässigen Korrosionsvorgängen innerhalb der Zylinderlaufbuchse bei den beteiligten Maschinenkomponenten.

Wird beispielsweise beim Betrieb mit schwefelreichem Brennstoff, z. B Schweröl oder Diesel, die Zylinderlaufbuchse so stark gekühlt, dass der obere Bereich der Zylinderlaufbuchse auch bei Volllast des Motors nicht zu heiss wird, so kann dies im Teillast Betrieb dazu führen, dass im kühleren unteren Bereich der Zylinderlaufbuchse bei dem vorhandenen Druckniveau der Taupunkt unterschritten wird. Dies hat zur Folge, dass es zu Säurebildung kommt, insbesondere zur Bildung von schwefeliger Säure und Schwefelsäure.

Somit kann durch die Temperaturverteilung in der Zylinderlaufbuchse die Bildung schädlicher Säuren und auch z. B. die Kaltkorrosion entsprechend begünstigt bzw. ungünstig beeinflusst werden. Die Liste der vorgenannten schädlichen Wirkungen ist dabei nur beispielhaft zu verstehen und bei weitem nicht abschliessend. Dem Fachmann ist dabei eine Vielzahl weiterer negativer Folgen bestens bekannt.

Die EP 2 848 786 A1 offenbart eine Kühlvorrichtung, bei der für den Zylinderdeckel und die Zylinderlaufbuchse jeweils ein eigenes separates Kühlsystem vorgesehen ist und in dem Fall, dass ein Strömungsaustausch zwischen dem Laufbuchsenkühlfluid und dem Deckelkühlfluid verhindert wird, kommt es nicht zu einer Durchmischung der Kühlmedien des Deckelkühlsystems und des Laufbuchsenkühlsystems.

Im Stand der Technik sind auch Kühlkreisläufe bekannt, bei welchen ein gemeinsamer Kühlkreislauf für Zylinderlaufbuchse und Zylinderdeckel vorliegt. Hierbei wird das Kühlfluid von derZylinderlaufbuchse in den Zylinderdeckel geführt. Über eine Pumpe und ein Rückschlagventil kann dabei eingestellt werden, ob ein bereits verwendetes, also ein aufgeheiztes Kühlfluid rezirkuliert wird, also ob das Kühlfluid, welches aus der Zylinderlaufbuchse austritt wieder teilweise an einen Kühlfluideingang der Zylinderlaufbuchse zurückgeführt wird. Eine derartige Rezirkulation des Kühlfluids wird insbesondere bei Teillastbetrieb des Motors verwendet, wobei für die Rezirkulation eine Pumpe verwendet wird, welche für die Rezirkulation des Kühlfluids aktiviert wird. Der Nachteil eines derartigen Aufbaus ist dabei, dass bei der Pumpe, sobald ausgeschaltet, Standschäden auftreten können. Die Pumpe wird eben nur beim Teillastbetrieb verwendet und für Volllastbetrieb ausgeschaltet.

Somit ist bei den aus dem Stand der Technik bekannten Zylinderanordnungen nicht nur eine stark reduzierte Lebensdauer der beteiligten Komponenten wie beispielweise der Zylinderlaufbuchse selbst, oder zumindest der Lauffläche der Zylinderlaufbuchse, Kolbenringe, Kolben, Zylinderdeckel und darin vorgesehenen Komponenten wie Einspritzdüsen, Auslassventil, hydraulischen Ventilen, Pumpen und Einrichtungen usw. zu erwarten, sondern es ist auch mit Leistungsverlusten beim Betrieb des Motors zu rechnen, was zu einem erhöhten Treibstoffverbrauch und letztlich alles in allem zu höheren Kosten und einer Verschlechterung der Effizienz beim Betrieb führt.

Die Aufgabe der Erfindung ist es daher, eine Zylinderanordnung vorzuschlagen, welche die aus dem Stand der Technik bekannten Nachteile vermeidet. Ferner ist es eine Aufgabe der Erfindung einen verbesserten Grossmotor vorzuschlagen, welcher die aus dem Stand der Technik bekannten Nachteile vermeidet. Eine weitere Aufgabe der Erfindung ist es ein verbessertes Verfahren zur Kühlung eines Grossmotors vorzuschlagen, welches die aus dem Stand der Technik bekannten Nachteile vermeidet.

Die diese Aufgaben lösenden Gegenstände der Erfindung sind durch die Merkmale der unabhängigen Ansprüche 1, 14 und 15 gekennzeichnet.

Die abhängigen Ansprüche beziehen sich auf besonders vorteilhafte Ausführungsformen der Erfindung.

Die Erfindung betrifft somit eine Zylinderanordnung für einen Grossmotor, welcher insbesondere ein längsgespülter Zweitakt-Grossdieselmotor sein kann. Die Zylinderanordnung umfasst hierbei eine Zylinderlaufbuchse, sowie einen Zylinderdeckel. In der Zylinderlaufbuchse ist in bekannter Weise ein Kolben installierbar, der im Betriebszustand zwischen einem oberen Totpunkt und einem unteren Totpunkt derart entlang einer Zylinderachse der Zylinderlaufbuchse hin- und herbewegbar angeordnet ist, dass eine Oberseite des Kolbens zusammen mit einer Lauffläche der Zylinderlaufbuchse und dem an der Zylinderlaufbuchse angeordneten Zylinderdeckel einen Brennraum begrenzt. Die Zylinderlaufbuchse besitzt dabei einen ersten Kühleingang zur Zufuhr eines Kühlfluids in die Zylinderlaufbuchse und einen ersten Kühlausgang zur Abfuhr des Kühlfluids aus der Zylinderlaufbuchse. Der Zylinderdeckel besitzt einen zweiten Kühleingang zur Zufuhr des Kühlfluids in den Zylinderdeckel und einen zweiten Kühlausgang zur Abfuhr des Kühlfluids aus dem Zylinderdeckel. Ferner umfasst die Zylinderanordnung einen Kühlkreislauf, welcher derart mit dem ersten Kühleingang, dem zweiten Kühleingang, dem ersten Kühlausgang und dem zweiten Kühlausgang verbunden ist, dass das Kühlfluid vom ersten Kühlausgang zum ersten Kühleingang und zum zweiten Kühleingang führbar ist. Das Kühlfluid kann also im Betriebszustand mittels des Kühlkreislaufs zur Zylinderlaufbuchse und zum Zylinderdeckel geführt werden, um diese auf eine vorgebbare Temperatur zu kühlen bzw. um das Kühlwasser auf eine vorgebbare Temperatur erwärmen zu lassen. Im Kühlkreislauf ist dafür zwischen dem ersten Kühlausgang und dem ersten Kühleingang ein ansteuerbares Mischventil angeordnet, wobei im Kühlkreislauf eine Zirkulationspumpe zwischen dem Mischventil und dem ersten Kühleingang zur Rezirkulation des Kühlfluids vom ersten Kühlausgang zum ersten Kühleingang angeordnet ist. Das Mischventil ist hierbei mit der Zirkulationspumpe, dem ersten Kühlausgang und einer Kühlfluidzufuhr zur Zufuhr von frischem Kühlfluid strömungsverbunden und derart ausgestaltet, dass eine rezirkulierbare Menge des Kühlfluids einstellbar ist.

Wesentlich für die Erfindung ist also, dass das Mischventil derart regelbar ist, dass abhängig vom Betriebszustand, insbesondere Volllast oder Teillast, schwefelarmen bzw. schwefelfreiem oder hochschwefeliger Betrieb, das dem ersten Kühleingang der Zylinderanordnung zugeführte Kühlfluid vorzugsweise eine Mischung mit vorgebbaren Anteilen von frischem und rezirkuliertem Kühlfluid sein kann, vorzugsweise mit temperaturgesteuerter Anpassung der Mengenverhältnisse.

Unter frischem Kühlfluid ist dabei kaltes Kühlfluid zu verstehen, welches nicht vom ersten Kühlausgang der Zylinderlaufbuchse stammt, also vorangehend in der Zylinderlaufbuchse erhitzt wurde, sondern Kühlfluid, welches von der Kühlfluidzufuhr stammt und zum Beispiel über einen Wärmetauscher abgekühlt oder aus einem Reservoir zugeführt wird.

Durch die vorliegende Erfindung wird insbesondere eine flexible Einstellung der Betriebstemperatur, insbesondere in Abhängigkeit des Betriebszustandes ermöglicht. Bei der erfindungsgemässen Zylinderanordnung ist die Betriebstemperatur über das Kühlfluid bzw. über die Menge des vom ersten Kühlausgang zum ersten Kühleingang rezirkulierten Kühlfluids einstellbar. Die Temperatur des Kühlfluids, insbesondere des Kühlfluids in der Zylinderlaufbuchse ist durch das regelbare Mischventil einfach einstellbar bzw. regelbar oder steuerbar. So kann im Teillastbetrieb insbesondere mit schwefelhaltigen Brennstoffen eine zu starke Kühlung der Zylinderlaufbuchse vermieden werden, welche zur Bildung aggressiver Substanzen, beispielsweise schwefliger Säure oder Schwefelsäure führen könnte.

Aufgrund der erfindungsgemässen Anordnung können Standschäden der Zirkulationspumpe vermieden werden, da die Zirkulationspumpe durch die Anordnung mit dem Mischventil im Betriebszustand (also bei laufendem Motor) permanent verwendet werden kann, ohne ausgeschaltet werden zu müssen.

In einer besonders bevorzugten Ausführung kann das Mischventil als ein Drei-Wege-Ventil, insbesondere als Dreiwegemischer ausgestaltet sein. Der Dreiwegemischer hat, wie ein Umschaltventil, drei Anschlüsse und wird vorzugsweise so geschaltet, dass ein Anschluss mit der Zirkulationspumpe verbunden ist, ein Anschluss mit der Kühlfluidzufuhr, und ein Anschluss mit dem ersten Kühlausgang, um das dort austretende Kühlfluid zumindest teilweise rezirkulieren zu können. Dabei hat der Dreiwegemischer vorzugsweise zwei extreme Stellungen: eine Offenstellung, in welcher das Kühlfluid, welches zum ersten Kühleingang geführt wird, vollständig von der Kühlfluidzufuhr stammt, d.h. die Rezirkulation des Kühlfluids vom ersten Kühlausgang zum ersten Kühleingang ist geschlossen; und eine Schliessstellung, in welcher das Kühlfluid, das aus dem ersten Kühlausgang ausströmt, vollständig zum ersten Kühleingang rezirkuliert wird. Der Dreiwegemischer ist zwischen diesen beiden extremen Stellungen beliebig einstellbar, sodass die Menge des vom ersten Kühlausgang zum ersten Kühleingang rezirkulierten Kühlfluids einstellbar ist. In Ausführung der Erfindung ist die Offenstellung oder eine Zwischenstellung zwischen der Offenstellung und der Schliessstellung mit einer Mischung von frischen und rezirkuliertem Kühlfluid bevorzugt. Die Zwischenstellung mit einer Mischung von frischen und rezirkuliertem Kühlfluid kann in Abhängigkeit vom Betriebszustand auf verschiedene Mischungsverhältnisse von frischem und rezirkuliertem Kühlfluid eingestellt oder geregelt oder gesteuert werden, z. B. um eine vorgegebene Temperatur am ersten Kühlausgang zu erreichen. Das erfindungsgemäss vorgesehene Mischventil kann selbstverständlich auch als ein Vierwegemischer beziehungsweise als ein beliebiger Mehrwegemischer bzw. ein beliebiges Mehrwegventil ausgestaltet sein.

Insbesondere ist es auch möglich, dass das Mischventil als eine Kombination von zwei Zwei-Wege-Ventilen ausgestaltet ist. Dabei dient eines der Zwei-Wege-Ventile dazu, die Menge des vom ersten Kühlausgang zum ersten Kühleingang rezirkulierten Kühlfluids einzustellen. Das andere Zwei-Wege-Ventil dient dazu, die Menge des frischen Kühlfluids einzustellen.

In der Praxis ist das ansteuerbare Mischventil über eine Steuerung derart steuerbar, dass die rezirkulierbare Menge des Kühlfluids einstellbar ist. Die Mischung von rezirkuliertem und frischem Kühlfluid, welche dem ersten Kühleingang zugeführt wird, kann so über die Ansteuerung des Mischventils beliebig eingestellt werden. Hierbei kann die Steuerung insbesondere ein Controller sein, welcher eine elektronische Einheit oder eine computerimplementierte Einrichtung umfasst, die das Mischventil ansteuert. Wie vorangehend bereits beschrieben, kann das Mischventil durch die Steuerung auch derart angesteuert werden, dass die Rezirkulation des Kühlfluids vom ersten Kühlausgang zum ersten Kühleingang unterbunden bzw. vermieden wird, sodass der erste Kühleingang nur mit frischem Kühlfluid gespeist wird.

Die Ansteuerung des Mischventils muss hierbei selbstverständlich nicht manuell erfolgen. Vorzugsweise umfasst die erfindungsgemässe Zylinderanordnung Sensoren, um eine zumindest weitgehend automatische Steuerung zu ermöglichen. Hierbei kann unter anderem an dem Kühlkreislauf in Strömungsrichtung hinter dem ersten Kühlausgang ein erster Temperatursensor angeordnet sein. Der erste Temperatursensor ist dabei vorzugsweise in der Nähe des ersten Kühlausgangs angeordnet, an einer Stelle, die stromaufwärts der Verzweigung liegt, von welcher das Kühlfluid einerseits dem ersten Kühleingang und anderseits dem zweiten Kühleingang zuführbar ist. Der erste Temperatursensor kann dabei derart mit der Steuerung verbunden sein, dass die rezirkulierbare Menge des Kühlfluids in Abhängigkeit der mit dem ersten Temperatursensor gemessenen Temperatur des Kühlfluids eingestellt wird beziehungsweise einstellbar ist, insbesondere regelbar oder steuerbar.

Ausserdem kann an dem Kühlkreislauf in Strömungsrichtung hinter dem zweiten Kühlausgang ein zweiter Temperatursensor angeordnet sein, um die Temperatur des Kühlfluids am oder stromabwärts benachbart zum zweiten Kühlausgang zu ermitteln. Die mit dem zweiten Temperatursensor ermittelte Temperatur wird vorzugsweise dazu verwendet, die Temperatur des frischen Kühlmittels auf einen vorgebbaren Wert einzustellen. Es ist eine bevorzugte Ausgestaltung, wenn die mittels des zweiten Temperatursensors erfasste Temperatur keinen unmittelbaren Einfluss auf die rezirkulierte Menge an Kühlfluid hat, sondern lediglich der Einstellung bzw. Regelung der Temperatur des frischen Kühlmittels dient. In der Praxis wird hierbei vorzugsweise für die von dem zweiten Temperatursensor ermittelte Temperatur ein fester Temperaturbereich beziehungsweise eine feste Temperatur vorgegeben, insbesondere 60 - 100 °C, vorzugsweise etwa 80 °C - 90 °C.

In Ausgestaltung der Erfindung kann der zweite Kühleingang über den Kühlkreislauf mit der Kühlfluidzufuhr zur Zufuhr von frischem Kühlfluid verbunden sein. Durch eine derartige Anordnung kann ein gleichmässiger Volumenstrom durch die Zylinderanordnung ermöglicht werden, da z.B. durch eine Ausgleichsleitung eine Menge an Kühlfluid, welche rezirkuliert wird, also nicht direkt zur weiteren Kühlung in den Zylinderdeckel gelangt, durch frisches Kühlfluid ersetzt werden kann, um so auch eine gleichmässige Kühlung des Zylinderdeckels mit gleichmässigem Volumenstrom zu ermöglichen. Dass durch die Ausgleichsleitung die zum ersten Eingang rezirkulierte Menge an Kühlfluid ausgleichbar ist, bedeutet also, dass die rezirkulierte Menge an Kühlfluid zumindest teilweise durch frisches Kühlfluid ersetzt wird.

Vorzugsweise können ein Laufbuchsenkühlsystem in einer Zylinderwand der Zylinderlaufbuchse und ein Deckelkühlsystem im Zylinderdeckel angeordnet sein. Das Deckelkühlsystem wird dabei primär für die Kühlung des Zylinderdeckels und der am Zylinderdeckel vorgesehenen bzw. montierten Komponenten, wie beispielsweise das Auslassventil, verwendet.

Hierbei kann das Deckelkühlsystem bevorzugt derart im Zylinderdeckel angeordnet sein, dass das Kühlfluid über den zweiten Kühleingang dem Deckelkühlsystem zuführbar ist und über den zweiten Kühlausgang aus dem Deckelkühlsystem abführbar ist.

Analog kann das Laufbuchsenkühlsystem bevorzugt derart in der Zylinderlaufbuchse angeordnet sein, dass das Kühlfluid über den ersten Kühleingang dem Laufbuchsenkühlsystem bzw. der Laufbuchse zuführbar ist und über den ersten Kühlausgang aus dem Laufbuchsenkühlsystem bzw. aus der Laufbuchse abführbar ist.

Sowohl Deckelkühlsystem als auch Laufbuchsenkühlsystem sind vorzugsweise Teil des Kühlkreislaufs der Zylinderanordnung.

Als Kühlfluid wird dabei besonders bevorzugt Öl und/oder Wasser, insbesondere Seewasser und /oder Frischwasser und/oder Süsswasser verwendet. Das Kühlfluid wird bevorzugt durch die Zirkulationspumpe durch den Kühlkreislauf bewegt. Die Zirkulationspumpe kann beispielsweise eine Propellerpumpe oder eine Kreiselpumpe sein. Weitere Unterstützungspumpen können an der Zylinderanordnung angeordnet sein, um die Zirkulation des Kühlfluids zu unterstützen beziehungsweise andere Fluide zu zirkulieren.

Solche Unterstützungspumpen können zum Beispiel hilfreich sein, wenn der Kühlkreislauf ein geschlossener Kreislauf ist und mit einem Rückkühlfluid, insbesondere Niedertemperaturkühlwasser, rückgekühlt wird. Hier kann z.B. ein Wärmetauscher zur Rückkühlung des Kühlfluids mit dem Rückkühlfluid verwendet werden, wobei sowohl das Kühlfluid, als auch das Rückkühlfluid in Kreisläufen (Kühlkreislauf und Rückkühlkreislauf) durch den Wärmetauscher geführt werden, wobei das Kühlfluid Wärme an das Rückkühlfluid abgibt und somit gekühlt wird. Der Rückkühlkreislauf wird hierbei bevorzugt mit frischem oder kaltem Rückkühlfluid, insbesondere Seewasser gespeist und kann mit einer Unterstützungspumpe angetrieben werden. Der Wärmetauscher kann hierbei zum Beispiel über das Gegenstromprinzip gekühlt werden.

Das gesamte Kühlsystem für den Grossmotor umfasst vorzugsweise ausser dem Kühlkreislauf, welcher zum Hochtemperatursystem gehört, ein Niedertemperatursystem, mit welchem das Kühlfluid des Hochtemperatursystems (Kühlkreislauf) rückgekühlt wird, sowie ein weiteres System, mit welchem das Rückkühlfluid des Niedertemperatursystems rückgekühlt wird. Das Kühlfluid des Kühlkreislaufes, welcher zum Hochtemperatursystem gehört, ist in direktem thermischen Kontakt mit den Zylindern des Grossmotors. Das Niedertemperatursystem ist thermisch über einen Wärmetauscher mit dem Hochtemperatursystem gekoppelt, sodass das Rückkühlfluid des Niedertemperatursystems Wärme von dem Kühlfluid des Hochtemperatursystems aufnehmen und dieses somit kühlen kann. Das weitere System ist thermisch über einen Wärmetauscher mit dem Niedertemperatursystem gekoppelt, sodass der Wärmeträger des weiteren Systems Wärme von dem Rückkühlfluid des Niedertemperatursystems aufnehmen und dieses somit kühlen kann. Anstelle von Wärmetauschern können auch Mischsysteme bzw. eine Mischvorrichtung oder mehrere Mischvorrichtungen vorgesehen sein, sofern eine Koppelung der Kreisläufe technisch möglich ist, z. B. unter Beachtung des Druckniveaus und der Kompatibilität der Kühlmedien.

Das Kühlfluid des Hochtemperatursystems ist vorzugsweise Süsswasser, dem Additive beigefügt sein können. Das Rückkühlfluid des Niedertemperatursystems ist vorzugsweise Süsswasser, dem Additive beigefügt sein können. Der Wärmeträger des weiteren Systems ist vorzugsweise Seewasser, insbesondere wenn der Grossmotor das Antriebsaggregat eines Schiffes ist.

Die Zylinderanordnung kann derart ausgestaltet sein, dass das Kühlfluid durch den ersten Kühlausgang direkt oder indirekt in den Zylinderdeckel förderbar ist. Indirekt bedeutet, dass das Kühlfluid über Leitungen aus der Zylinderlaufbuchse herausgeführt wird und dann in den Zylinderdeckel hinein.

Ein weiterer Aspekt der Erfindung betrifft ein Verfahren zur Kühlung eines Zylinders für einen Grossmotor, welcher eine erfindungsgemässe Zylinderanordnung umfasst. Bei dem erfindungsgemässen Verfahren wird die rezirkulierte Menge des Kühlfluids über das Mischventil eingestellt. Hierfür wird das Mischventil angesteuert und derart eingestellt, dass frisches und rezirkuliertes Kühlfluid in einem vorgebbaren Verhältnis gemischt werden, um eine gewünschte Temperatur einzustellen. Das Steuern des Mischventils kann selbstverständlich automatisch erfolgen und zum Beispiel mit Sensoren, insbesondere Temperatursensoren in Form einer Regelung ausgestaltet sein. Hierbei wird vorzugsweise fortlaufend die Temperatur an einer geeigneten Stelle des Kühlkreislaufs erfasst, und mit einem vorgebbaren Temperaturrichtwert verglichen. Das Mischventil wird dann im Sinne einer Angleichung an den Temperaturrichtwert beeinflusst.

Dies hat den Vorteil, dass die Kühlung der Zylinderanordnung zuverlässig an die Last des Motors angepasst werden kann.

Ein weiterer Aspekt der Erfindung betrifft einen Grossmotor, welcher eine erfindungsgemässe Zylinderanordnung umfasst, wobei die rezirkulierbare Menge des Kühlfluids über das ansteuerbare Mischventil eingestellt wird.

Der Grossmotor kann beispielsweise als längsgespülter Grossmotor ausgestaltet sein.

In einer bevorzugten Ausgestaltung ist der Grossmotor als längsgespülter Zweitakt-Grossdieselmotor ausgestaltet.

Insbesondere kann der Grossmotor auch als Dual-Fuel Grossdieselmotor ausgestaltet sein, der in einem Flüssigmodus betreibbar ist, in welchem ein flüssiger Brennstoff zur Verbrennung in einen Brennraum eingebracht wird, und der ferner in einem Gasmodus betreibbar ist, in welchem ein Gas oder ein leichtentzündlicher Flüssigbrennstoff (low flashpoint liquid LFL) als Brennstoff in den Brennraum eingebracht wird. Optional ist es auch möglich, dass der Dual-Fuel Motor ferner für einem Mischmodus ausgestaltet ist, in welchem beide Brennstoffe gleichzeitig zur Anwendung kommen.

Bei Dual-Fuel Motoren hat es sehr grosser Vorteile, dass die Kühlung der Zylinderanordnung zuverlässig an die Last und den jeweiligen Brennstoff des Motors angepasst werden kann. Dies hängt damit zusammen, dass in einem Dieselbetrieb mit typischerweise schwefelhaltigem Schweröl oder einem anderen schwefelhaltigen Brennstoff hohe Betriebstemperaturen der Zylinderlaufbuchse erwünscht sind, um die Bildung von Säuren durch Kondensation von Wasser an der Wand der Zylinderlaufbuchse zu vermeiden. Dagegen sind in einem Gasbetrieb, beispielsweise mit Erdgas als Brennstoff, möglichst niedrigere Betriebstemperaturen der Zylinderlaufbuchse gewünscht.

Ist die Betriebstemperatur der Zylinderlaufbuchse im Dieselbetrieb zu niedrig, entsteht Säure, insbesondere schweflige Säure und Schwefelsäure, welche die Zylinderanordnung schädigen kann. Die Bildung von Säuren ist dagegen beim Gasbetrieb üblicherweise kein Problem, da im Gas bzw. den anderen leichtentzündliche Flüssigbrennstoffen in der Regel kein Schwefel vorhanden ist. Im Gasbetrieb können zu hohe Betriebstemperaturen der Zylinderlaufbuchse jedoch zu Fehlzündungen durch Selbstentzündung des Luft-Gasgemisches führen. Im Gasbetrieb strebt man daher - auch aus thermodynamischen Gründen - üblicherweise eine möglichst starke Kühlung der Laufbuchse an.

Im Folgenden wird die Erfindung sowohl in apparativer als auch in verfahrenstechnischer Hinsicht anhand von Ausführungsbeispielen unter Bezugnahme auf die Zeichnung näher erläutert. Die Zeichnung zeigt in schematischer Darstellung:
- Fig. 1: ein erstes Ausführungsbeispiel einer erfindungsgemässen Zylinderanordnung, und
- Fig. 2: ein zweites Ausführungsbeispiel einer erfindungsgemässen Zylinderanordnung.

Die Ausführungsbeispiele zeigen Zylinderanordnungen, welche insbesondere für Grossmotoren geeignet sind.

Mit dem Begriff "Grossmotor" sind solche Motoren gemeint, wie sie üblicherweise als Hauptantriebsaggregate für Schiffe oder auch im stationären Betrieb, z. B. zum Antrieb grosser Generatoren zur Erzeugung elektrischer Energie eingesetzt werden. Typischerweise haben die Zylinder eines Grossmotors jeweils einen Innendurchmesser (Bohrung), der mindestens etwa 200 mm beträgt.

Der Grossmotor kann als Viertakt- oder als Zweitakt-Motor ausgestaltet sein. Insbesondere kann der Grossmotor als Grossdieselmotor ausgestaltet sein, speziell als längsgespülter Zweitakt-Grossdieselmotor. Mit dem Begriff "Grossdieselmotor" sind dabei solche Grossmotoren gemeint, die in einem Dieselbetrieb betreibbar sind, bei welchem die Verbrennung des Brennstoffs üblicherweise nach dem Prinzip der Selbstzündung erfolgt. Im Rahmen dieser Anmeldung sind mit dem Begriff "Grossdieselmotor" auch solche Grossmotoren gemeint, die ausser im Dieselbetrieb, alternativ auch in einem Ottobetrieb betrieben werden können. Im Ottobetrieb erfolgt die Verbrennung typischerweise nach dem Prinzip der Fremdzündung des Brennstoffs. Auch ist es möglich, dass der Grossdieselmotor in Mischformen aus dem Dieselbetrieb und dem Ottobetrieb betrieben werden kann.

Bei der folgenden Beschreibung der Erfindung wird mit beispielhaftem Charakter auf den für die Praxis wichtigen Fall eines Grossmotors Bezug genommen, der als längsgespülter Zweitakt-Grossdieselmotor ausgestaltet ist, und der als Hauptantriebsaggregat eines Schiffes verwendet wird. Dieser Grossdieselmotor ist vorzugsweise als Dual-Fuel Grossdieselmotor ausgestaltet, sodass er mit zwei unterschiedlichen Brennstoffen betreibbar ist, nämlich mit einem flüssigen Brennstoff wie Schweröl oder Marinediesel, und mit einem gasförmigen Brennstoff, z. B. Erdgas, oder mit einem leichtentzündlichen Flüssigbrennstoff, der nach dem Otto-Prinzip mit Fremdzündung verbrannt wird . Der Dual-Fuel Grossdieselmotor kann während des Betriebs vom Verbrennen des ersten Brennstoffs auf das Verbrennen des zweiten Brennstoffs umgeschaltet werden und umgekehrt. Er ist also in einem Flüssigmodus betreibbar, in welchem ein flüssiger Brennstoff zur Verbrennung in den Brennraum eingebracht wird, und ferner in einem Gasmodus (auch Gasbetrieb), in welchem ein Gas als Brennstoff in den Brennraum eingebracht wird oder ein leichtentzündlicher Flüssigbrennstoff (low flashpoint liquid LFL). Im Flüssigmodus wird der Grossmotor mit Selbstzündung des Brennstoffs betrieben (Dieselbetrieb), und im Gasmodus wird der Grossmotor mit Fremdzündung des Brennstoffs betrieben (Ottobetrieb). Im Gasmodus wird der Dual-Fuel-Motor vorzugsweise nach einem Niederdruckverfahren betrieben. Die Fremdzündung des Luft-GasGemisches im Zylinder erfolgt im Gasmodus vorzugsweise durch die Einspritzung einer kleinen Menge selbstzündenden Brennstoffs, z. B. Schweröl oder Diesel, welche dann das Luft-Gas-Gemisch fremdzündet.

Es versteht sich, dass die Erfindung nicht auf diesen Typ von Grossmotor und auf diese Verwendung beschränkt ist, sondern Grossmotoren im Allgemeinen betrifft. Dabei ist es auch möglich, dass der Grossmotor nur für die Verbrennung eines einzigen Brennstoffs, beispielsweise Schweröl, Marinediesel oder Diesel, oder eines Gases wie Erdgas ausgestaltet ist. Der Grossmotor kann also auch als Gasmotor ausgestaltet sein. Auch ist es möglich, dass der Grossmotor als Multi-Fuel Grossmotor ausgestaltet ist, der mit einem ersten Brennstoff betrieben werden kann, und der mit mindestens einem zweiten Brennstoff betrieben werden kann, der von dem ersten Brennstoff verschieden ist. Natürlich kann der Grossmotor auch für die Verbrennung von mehr als zwei Brennstoffen ausgestaltet sein.

Bezüglich des Brennstoffs bzw. der Brennstoffe, mit welchen der Grossmotor betrieben werden kann, wird mit beispielhaftem Charakter auf die eingangs erläuterten Brennstoffe verwiesen.

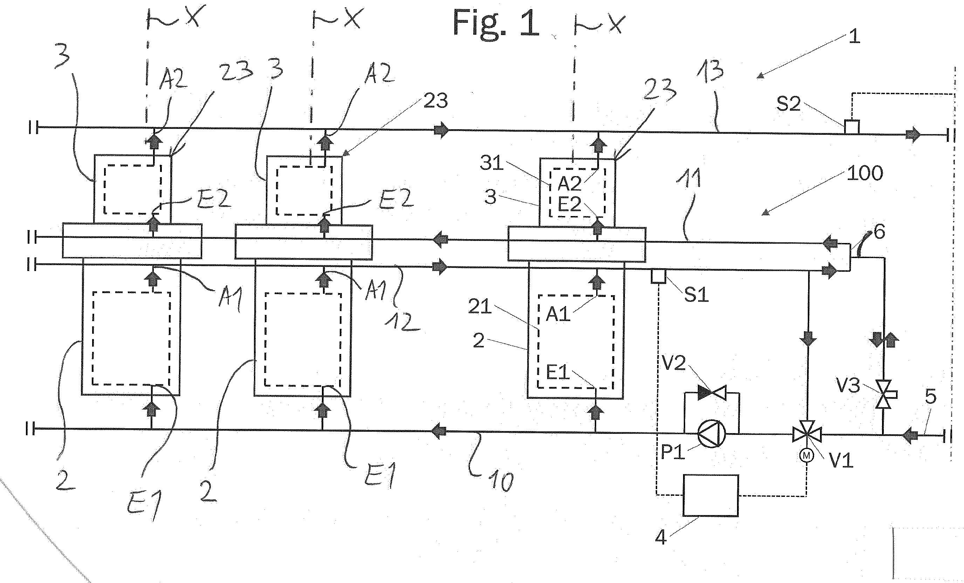

In Fig. 1 ist schematisch ein erstes Ausführungsbeispieleiner erfindungsgemässen Zylinderanordnung 1 für einen Grossmotor, insbesondere für einen längsgespülten Zweitakt-Grossdieselmotor, dargestellt. Die Zylinderanordnung 1 umfasst mehrere Zylinder 23, von denen in Fig. 1 drei dargestellt sind. Eine derartige Anordnung ist insbesondere mit einer vorgebbaren Anzahl von Zylindern 23 für einen erfindungsgemässen Grossmotor geeignet.

Jeder Zylinder 23 umfasst in an sich bekannter Weise eine Zylinderlaufbuchse 2, die oft auch als Zylinderliner oder als Liner bezeichnet wird. In jeder Zylinderlaufbuchse 2 ist in an sich bekannter Weise ein nicht dargestellter Kolben angeordnet, der im Betriebs- und Einbauzustand zwischen einem oberen Totpunkt und einem unteren Totpunkt derart entlang einer Zylinderachse X der Zylinderlaufbuchse 2 hin- und herbewegbar angeordnet ist, dass eine Oberseite des Kolbens zusammen mit einer Lauffläche der Zylinderlaufbuchse 2 und einem an der Zylinderlaufbuchse 2 angeordneten Zylinderdeckel 3 einen Brennraum begrenzt.

Fig. 1 zeigt dabei eine erfindungsgemässe Ausgestaltung der Zylinderanordnung 1. Jede Zylinderlaufbuchse 2 besitzt jeweils einen ersten Kühleingang E1 zur Zufuhr eines Kühlfluids in die Zylinderlaufbuchse 2 und einen ersten Kühlausgang A1 zur Abfuhr des Kühlfluids aus der Zylinderlaufbuchse 2. Jeder Zylinderdeckel 3 besitzt einen zweiten Kühleingang E2 zur Zufuhr des Kühlfluids in den Zylinderdeckel 3 und einen zweiten Kühlausgang A2 zur Abfuhr des Kühlfluids aus dem Zylinderdeckel 3. Die dargestellte Zylinderanordnung 1 umfasst einen Kühlkreislauf 100. Dieser Kühlkreislauf 100 ist in Form von Leitungen mit jedem Zylinder 23 verbunden.

Dabei sind alle Zylinder 23 in dem Kühlkreislauf 100 parallel geschaltet, d.h. alle ersten Kühleingänge E1 sind mit einer ersten Zuführleitung 10 strömungsverbunden, alle ersten Kühlausgänge A1 sind mit einer ersten Auslassleitung 12 strömungsverbunden, alle zweiten Kühleingänge E2 sind mit einer zweiten Zuführleitung 11 strömungsverbunden und alle zweiten Kühlausgänge A2 sind mit einer zweiten Auslassleitung 13 verbunden.

Für jeden Zylinder 23 ist der Kühlkreislauf 100 derart mit dem jeweiligen ersten Kühleingang E1, dem jeweiligen zweiten Kühleingang E2, dem jeweiligen ersten Kühlausgang A1 und dem jeweiligen zweiten Kühlausgang A2 verbunden, dass das Kühlfluid vom ersten Kühlausgang A1 zum ersten Kühleingang E1 und zum zweiten Kühleingang E2 geführt werden kann. Der Kühlkreislauf 100 umfasst ausserdem eine Kühlfluidzufuhr 5, über welche dem Kühlkreislauf 100 frisches Kühlfluid zugeführt werden kann.

Im Kühlkreislauf 100 ist zwischen der ersten Auslassleitung 12, welche alle ersten Kühlausgänge A1 verbindet, und der ersten Zuführleitung 10, welche alle ersten Kühleingänge E1 verbindet, ein ansteuerbares Mischventil V1 angeordnet, welches derart angesteuert und reguliert werden kann, dass ein beliebiges Verhältnis von frischem und rezirkuliertem Kühlfluid und somit eine beliebige Betriebstemperatur eingestellt werden kann. Ausserdem ist im Kühlkreislauf 100 eine Zirkulationspumpe P1 zwischen dem Mischventil V1 und den ersten Kühleingängen E1 zur Rezirkulation des Kühlfluids von den ersten Kühlausgängen A1 zu den ersten Kühleingängen E1 angeordnet, sodass das Kühlfluid mittels der Zirkulationspumpe P1 durch den Kühlkreislauf 100 zirkuliert werden kann. Das Mischventil V1 ist mit der Zirkulationspumpe P1, der die ersten Kühlausgänge A1 verbinden, den ersten Auslassleitung 12 und einer Kühlfluidzufuhr 5 zur Zufuhr von frischem Kühlfluid strömungsverbunden, und derart ausgestaltet, dass eine rezirkulierbare Menge des Kühlfluids wie vorrangehend angedeutet einstellbar bzw. regelbar oder steuerbar ist.

Der Kühlkreislauf 100 umfasst ausserdem eine Ausgleichsleitung 6, mit welcher eine Menge an Kühlfluid, welche zu den ersten Kühleingängen E1 rezirkuliert wird, also nicht direkt zur weiteren Kühlung über die zweiten Kühleingänge E2 in die Zylinderdeckel 3 gelangt, durch frisches Kühlfluid ersetzt werden kann, um so auch eine gleichmässige Kühlung des Zylinderdeckels 3 mit gleichmässigem Volumenstrom zu ermöglichen. Die rezirkulierte Menge an Kühlfluid kann also, zumindest teilweise, durch frisches Kühlfluid ersetzt werden. Die Ausgleichsleitung 6 verbindet die Kühlfluidzufuhr 5 mit der Verbindung zwischen der ersten Auslassleitung 12 und der zweiten Zuführleitung 11, sodass alle ersten Kühlausgänge A1 und alle zweiten Kühleingänge E2 mit der Ausgleichsleitung 6 strömungsverbindbar sind. In der Ausgleichsleitung 6 ist ein ansteuerbares Ventil V3 vorgesehen, mit welchem die Ausgleichsleitung verschliessbar ist. Die Ausgleichsleitung 6 wird beispielsweise zum Vorwärmen des Grossmotors geschlossen.

Ferner ist eine Steuerung 4 zur Ansteuerung des Mischventils V1 vorgesehen. Die Steuerung 4 ist mit dem Mischventil V1 verbunden, welches als DreiWegeventil ausgestaltet ist. Durch die Steuerung 4 ist das Mischventil V1 derart ansteuerbar, dass die rezirkulierbare Menge des Kühlfluids einstellbar ist. Hierfür kann die rezirkulierte Menge des Kühlfluids, sowie die von der Kühlfluidzufuhr 5 breitgestellte Menge an frischem Kühlfluid reguliert werden. So wird ein Mischverhältnis von frischem Kühlfluid mit von den Kühlausgängen A1 durch die erste Auslassleitung 12 kommenden Kühlfluid eingestellt. Die Zirkulationspumpe P1 sorgt hierbei für die Zirkulation des Kühlfluids durch den Kühlkreislauf 100 im Betriebszustand. Die Zirkulationspumpe P1 ist hierbei bei eingeschaltetem Motor vorzugsweise immer in Betrieb, um Standschäden zu vermeiden.

Um auch bei einem Ausfall der Zirkulationspumpe P1 eine ausreichende Kühlung der Zylinder 23 sicherzustellen, ist parallel zu der Zirkulationspumpe P1 eine Überbrückungsleitung mit einem Rückschlagventil V2 vorgesehen. Falls während des Betriebs des Grossmotors die Zirkulationspumpe P1 ausfällt, so kann für den Notbetrieb von einer anderen Pumpe, beispielsweise derjenigen Pumpe, welche das Kühlfluid zu der Kühlfluidzufuhr 5 fördert, das Kühlfluid über das Rückschlagventil V2 zu den ersten Kühleingängen 5 gefördert werden.

Die Zylinderanordnung 1 besitzt des Weiteren einen ersten Temperatursensor S1. Der erste Temperatursensor S1 ist derart mit der Steuerung 4 verbunden, dass die rezirkulierbare Menge des Kühlfluids in Abhängigkeit, der mit dem ersten Temperatursensor S1 messbaren Temperatur des Kühlfluids einstellbar ist, insbesondere regelbar oder steuerbar ist.

Auch ist ein zweiter Temperatursensor S2 vorgesehen, welcher in der zweiten Auslassleitung 13 vorgesehen ist, um die Temperatur des Kühlfluids zu messen, welches durch die zweiten Kühlausgänge A2 austritt. Vorzugsweise wird die von dem zweiten Temperatursensor S2 gemessene Temperatur dazu genutzt, um die Temperatur des frischen Kühlfluids zu regeln, welches über die Kühlfluidzufuhr 5 eingespeist wird. Es ist bevorzugt, dass die Temperatur des Kühlfluids hinter den zweiten Kühlausgängen A2 bzw. in der zweiten Auslassleitung 13 , beispielsweise 80 °C - 90 °C eingeregelt oder eingestellt werden kann. Der Sensor S2 kann auch ausserhalb der dargestellten Systemgrenzen installiert werden.

Ferner sind zusätzlich ein Laufbuchsenkühlsystem 21 in einer Zylinderwand der Zylinderlaufbuchse 2 und ein Deckelkühlsystem 31 im Zylinderdeckel 3 gezeigt. Das Laufbuchsenkühlsystem 21 ist hierbei jeweils zwischen dem ersten Kühleingang E1 und dem ersten Kühlausgang A1 angeordnet, und das Deckelkühlsystem 31 ist jeweils zwischen dem zweiten Kühleingang E2 und dem zweiten Kühlausgang A2 angeordnet.

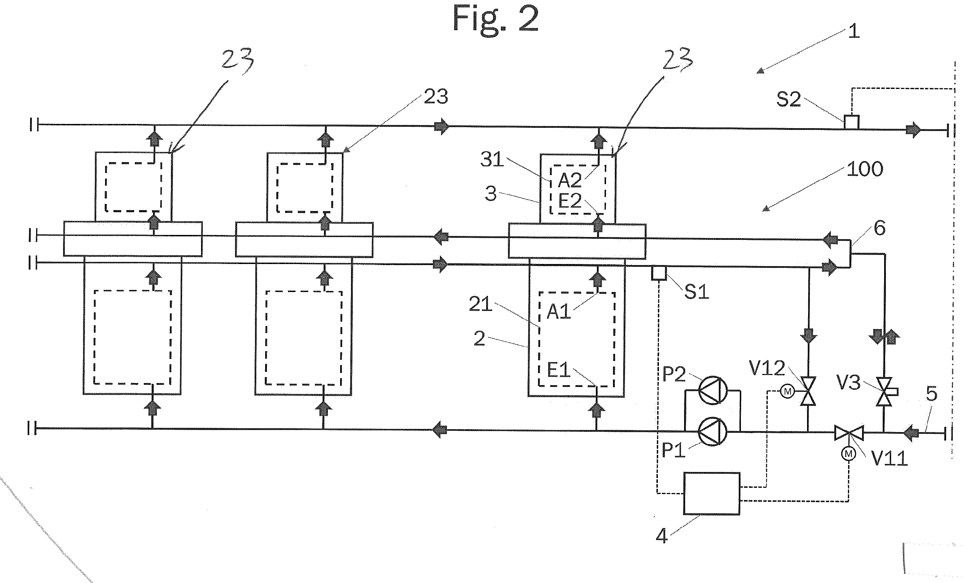

Fig. 2 zeigt in einer zu Fig. 1 analogen Darstellung ein zweites Ausführungsbeispiel einer erfindungsgemässen Zylinderanordnung 1. Im Folgenden werden nur die Unterschiede zu dem ersten Ausführungsbeispiel erläutert. Ansonsten gelten die Erklärungen bezüglich des ersten Ausführungsbeispiels in sinngemäss gleicher Weise auch für das zweite Ausführungsbeispiel.

Zum einen ist bei dem zweiten Ausführungsbeispiel anstelle des Rückschlagventils V2 eine Sekundärpumpe P2 am Kühlkreislauf 100 parallel zur Zirkulationspumpe P1 angeordnet, welche die Zylinderanordnung 1 und damit den Grossmotor im ausgeschalteten Zustand vor der Inbetriebnahme durch Zirkulation eines Fluids geeigneter Temperatur vorwärmt. Ferner dient die Sekundärpumpe P2 dazu, im Notfallbetrieb bei einem Ausfall der Zirkulationspumpe P1 das Kühlfluid durch den Kühlkreislauf 100 zu zirkulieren.

Natürlich kann auch bei dem ersten Ausführungsbeispiel alternativ oder ergänzend zu dem Rückschlagventil V2 eine solche Sekundärpumpe P2 vorgesehen sein.

Zum anderen ist bei dem zweiten Ausführungsbeispiel das Mischventil V1 als eine Kombination von zwei Zwei-Wege-Ventilen V11 und V12 ausgestaltet, wobei jedes Zwei-Wege-Ventil V11 und V12 mit der Steuerung 4 signalverbunden ist, sodass das jeweilige Zwei-Wege-Ventil von der Steuerung 4 ansteuerbar ist, beispielsweise über einen jeweiligen Stellmotor M. Das erste Zwei-Wege-Ventil V11 ist im Kühlkreislauf 100 zwischen der Kühlfluidzufuhr 5 und der Zirkulationspumpe P1 angeordnet. Mit diesem Ventil V11 kann die Menge an frischen Kühlfluid eingestellt werden, welche dem Kühlkreislauf 100 zugeführt wird. Das zweite Zwei-Wege-Ventil V12 ist in der Verbindung zwischen der ersten Auslassleitung 12 und der Zirkulationspumpe P1 angeordnet, also zwischen den ersten Kühlausgängen A1 und der Zirkulationspumpe P1. Mit diesem Ventil V12 kann die rezirkulierbare Menge des Kühlfluids eingestellt werden, welche von den ersten Kühlausgängen A1 zu den ersten Kühleingängen rezirkuliert wird.

Natürlich kann auch bei dem ersten Ausführungsbeispiel alternativ das Mischventil V1 in Form der Ventile V11 und V12 ausgestaltet sein.

In den Fig. 1 und Fig. 2 sind jeweils Unterbrechungen gezeigt, welche die Trennung zwischen der jeweils gezeigten Zylinderanordnung 1, die zum Grossmotor gehört, und dem nicht dargestellten Kühlsystem für die Bereitstellung des Kühlfluids darstellen. Diese Abtrennungen zeigen, wo die meist ausserhalb des Grossmotors und aus dem Stand der Technik bekannten weiteren Teile der Kühlsysteme angeordnet sind. Diese Teile umfassen beispielsweise weitere Pumpen, Ventile, Wärmetauscher und weitere an sich bekannte Komponenten, deren Ausgestaltung für die grundlegende, erfindungsgemässe Funktion der Zylinderanordnung 1 nicht von Bedeutung sind.

Der erfindungsgemäss vorgesehene Kühlkreislauf 100 bzw. die Komponenten Zirkulationspumpe P1, Mischventil V1 und Steuerung 4 des Kühlkreislaufes 100 können beispielsweise direkt am Grossmotor montiert sein. Es ist aber auch möglich, dass diese Komponenten separat und getrennt vom Grossmotor installiert werden, , und dann entsprechend über Leitungen mit dem Grossmotor verbindbar sind.

Im Folgenden wird anhand der beiden Ausführungsbespiele in Fig. 1 und Fig. 2 die Zirkulation des Kühlfluids durch den Kühlkreislauf 100 beispielhaft für einen der Zylinder 23 mit und ohne Rezirkulation des Kühlfluids beschrieben.

Das frische Kühlfluid wird dem Kühlkreislauf 100 über die Kühlfluidzufuhr 5 zugeführt. Durch die Zirkulationspumpe P1 zirkuliert das Kühlfluid durch den Kühlkreislauf 100. Hierbei wird das Kühlfluid über den ersten Kühleingang E1 der Zylinderlaufbuchse 2 zugeführt. Nach Durchlaufen der Zylinderlaufbuchse 2 verlässt das Kühlfluid die Zylinderlaufbuchse 2 durch den ersten Kühlausgang A1.

Soll das Kühlfluid oder Mengenanteile davon nun rezirkuliert werden, ist das Mischventil V1 in der Schliessstellung oder in einer Zwischenstellung, sodass das Kühlfluid oder Teile davon über den Kühlkreislauf 100 vom ersten Kühlausgang A1 zum ersten Kühleingang E1 rezirkuliert werden kann/können. In der Zwischenstellung wird das rezirkulierte Kühlfluid am Mischventil V1 mit frischem Kühlfluid von der Kühlfluidzufuhr 5 gemischt und dann wieder in den ersten Kühleingang E1 rückgeführt. Über dieses Mischungsverhältnis ist dann die Betriebstemperatur der Zylinderlaufbuchse beeinflussbar bzw. einstellbar. Der Teil des Kühlfluids, welcher nicht rezirkuliert wird, wird über den zweiten Kühleingang E2 dem Zylinderdeckel 3 zugeführt und nach Durchlaufen durch den Zylinderdeckel 3 über den zweiten Kühlausgang A2 aus dem Zylinderdeckel 3 abgeführt.

In der Zwischenstellung wird dem Zylinderdeckel 3 jedoch nicht nur das vom ersten Kühlausgang A1 stammende Kühlfluid zugeführt, sondern über die mit der Kühlfluidzufuhr 5 verbundenen Ausgleichsleitung 6 wird eine Menge des rezirkulierten Kühlfluids ausgeglichen und somit dem Zylinderdeckel 3 über den zweiten Kühleingang E2 zugeführt.

Das gewünschte Mischungsverhältnis von frischem und rezirkuliertem Kühlfluid, welches dem ersten Kühleingang E1 zugeführt wird, kann hierbei insbesondere über die Steuerung 4 eingestellt bzw. geregelt oder gesteuert werden. Hierfür kann an dem Temperatursensor S1 eine Temperatur für das vom ersten Kühlausgang A1 stammende Kühlfluid vorgegeben werden, welche dann über die Steuerung 4 eingestellt wird.

Soll das Kühlfluid nicht rezirkuliert werden, durchläuft das Kühlfluid wie vorrangehend beschrieben die Zylinderlaufbuchse 2, den Zylinderdeckel 3 und den Kühlkreislauf 100. Jedoch wird das Kühlfluid nicht vom ersten Kühlausgang A1 zum ersten Kühleingang E1 rezirkuliert, da das Mischventil V1 in der Offenstellung ist und dem ersten Kühleingang E1 somit nur das frische Kühlfluid von der Kühlfluidzufuhr 5 zugeführt wird. In dieser Stellung ist die Kühlung selbstverständlich stärker, da kein warmes, also rezirkuliertes Kühlfluid in den ersten Kühleingang E1 zurückgeführt wird. Eine derartige Stellung eignet sich somit zur stärkeren Kühlung, z. B. im Volllastbetrieb und/oder im Gasmodus.

Die vorrangehend beschriebene Zwischenstellung hingegen ist insbesondere für den Teillast- und/oder Dieselbetrieb geeignet, um eine zu starke Kühlung zu vermeiden.

Es ist also zu erkennen, dass die Zirkulationspumpe P1 in einer erfindungsgemässen Anordnung permanent angeschaltet sein kann, egal ob eine Rezirkulation des Kühlfluids durchgeführt wird oder nicht.

Die Zylinderanordnung 1, die beispielsweise in einem Dual-Fuel-Grossmotor angeordnet ist, kann unter anderem in einem Gasbetrieb oder einem Dieselbetrieb verwendet werden. Hierbei kann im Gasbetrieb eine andere Zieltemperatur am Sensor S1 vorgegeben werden als im Dieselbetrieb, bis hin dass das Mischventil V1 in der Offenstellung betrieben wird, d. h. es findet keine Zirkulation zwischen dem ersten KühlausgangA1 und dem ersten Kühleingang E1 statt. Die Temperatur wird also über das Mischungsverhältnis von frischem und rezirkuliertem Kühlfluid, welches dem ersten Kühleingang E1 zugeführt wird, mit der Steuerung 4 eingestellt oder geregelt oder gesteuert.

Im Dieselbetrieb wird die Temperatur am Temperatursensor S1 höher eingestellt, insbesondere im Teillastbetrieb, zum Beispiel auf 120 °C. Ausserdem kann am zweiten Temperatursensor S2 eine zweite Temperatur von z.B. 80 - 90 °C eingestellt werden.

Im Gasbetrieb und Dieselbetrieb ist die Zirkulationspumpe P1 vorzugsweise immer eingeschaltet, um, wie vorrangehend bereits erwähnt, Standschäden zu vermeiden. Der permanente Betrieb der Zirkulationspumpe P1 im Gasbetrieb und Dieselbetrieb wird durch die erfindungsgemässe Anordnung ermöglicht.

Bei einem Wechsel des Betriebszustandes werden die Temperaturen an den Temperatursensoren S1, S2 vorzugsweise langsam angepasst. Hierbei kann beim Umschalten von Gasbetrieb zum Dieselbetrieb die Temperatur um 1-10 °C, vorzugsweise 5 °C pro Minute erhöht werden. Beim Umschalten von Dieselbetrieb zum Gasbetrieb kann die Temperatur um 5-15 °C, vorzugsweise 10 °C pro Minute erniedrigt werden. Das System ist üblicherweise so ausgelegt, dass die Temperatur am Sensor 2 unabhängig von Motorlast und Betriebsmodus konstant gehalten wird.

Ein weiterer Betriebszustand eines Motors, insbesondere eines Grossmotors ist der Vorheizbetrieb. Für den Vorheizbetrieb wird das Ventil V3 geschlossen und das Mischventil V1 ist vorzugsweise in der Offenstellung. Das dann üblicherweise vorgewärmte Kühlfluid wird nun ohne Rezirkulation zum Vorwärmen des Grossmotors durch den Kühlkreislauf 100 bewegt, bevor der Motor gestartet wird.

## Patentansprüche

1. Zylinderanordnung für einen Grossmotor, insbesondere längsgespülten Zweitakt-Grossdieselmotor, umfassend eine Zylinderlaufbuchse (2), sowie einen Zylinderdeckel (3), wobei in der Zylinderlaufbuchse (2) ein Kolben installierbar ist, der im Betriebszustand zwischen einem oberen Totpunkt und einem unteren Totpunkt derart entlang einer Zylinderachse (X) der Zylinderlaufbuchse (2) hin- und herbewegbar angeordnet ist, dass eine Oberseite des Kolbens zusammen mit einer Lauffläche der Zylinderlaufbuchse (2) und dem an der Zylinderlaufbuchse (2) angeordneten Zylinderdeckel (3) einen Brennraum begrenzt, wobei die Zylinderlaufbuchse (2) einen ersten Kühleingang (E1) zur Zufuhr eines Kühlfluids in die Zylinderlaufbuchse (2) und einen ersten Kühlausgang (A1) zur Abfuhr des Kühlfluids aus der Zylinderlaufbuchse (2) umfasst, und der Zylinderdeckel (3) einen zweiten Kühleingang (E2) zur Zufuhr des Kühlfluids in den Zylinderdeckel (3) und einen zweiten Kühlausgang (A2) zur Abfuhr des Kühlfluids aus dem Zylinderdeckel (3) umfasst, wobei die Zylinderanordnung (1) einen Kühlkreislauf (100) umfasst, welcher derart mit dem ersten Kühleingang (E1), dem zweiten Kühleingang (E2), dem ersten Kühlausgang (A1) und dem zweiten Kühlausgang (A2) verbunden ist, dass das Kühlfluid vom ersten Kühlausgang (A1) zum ersten Kühleingang (E1) und zum zweiten Kühleingang (E2) führbar ist, wobei im Kühlkreislauf (100) zwischen dem ersten Kühlausgang (A1) und dem ersten Kühleingang (E1) ein ansteuerbares Mischventil (V1) angeordnet ist, wobei im Kühlkreislauf (100) eine Zirkulationspumpe (P1) zwischen dem Mischventil (V1) und dem ersten Kühleingang (E1) zur Rezirkulation des Kühlfluids vom ersten Kühlausgang (A1) zum ersten Kühleingang (E1) angeordnet ist, wobei das Mischventil (V1) mit der Zirkulationspumpe (P1), dem ersten Kühlausgang (A1) und einer Kühlfluidzufuhr (5) zur Zufuhr von frischem Kühlfluid strömungsverbunden ist, und wobei das Mischventil (V1) derart ausgestaltet ist, dass eine rezirkulierbare Menge des Kühlfluids einstellbar ist.

2. Zylinderanordnung nach Anspruch 1, wobei das Mischventil (V1) als ein Drei-Wege-Ventil (V1) ausgestaltet ist oder als eine Kombination von zwei Zwei-Wege-Ventilen.

3. Zylinderanordnung nach einem der vorangehenden Ansprüche, umfassend eine Steuerung (4), durch welche das Mischventil (V1) derart steuerbar ist, dass die rezirkulierbare Menge des Kühlfluids einstellbar ist.

4. Zylinderanordnung nach Anspruch 3, wobei das Mischventil (V1) durch die Steuerung (4) derart steuerbar ist, dass die Rezirkulation des Kühlfluids vom ersten Kühlausgang (A1) zum ersten Kühleingang (E1) unterbrechbar ist.

5. Zylinderanordnung nach einem der Ansprüche 3 oder 4, wobei an dem Kühlkreislauf (100) in Strömungsrichtung hinter dem ersten Kühlausgang (A1) ein erster Temperatursensor (S1) angeordnet ist, und der erste Temperatursensor (S1) derart mit der Steuerung (4) verbunden ist, dass die rezirkulierbare Menge des Kühlfluids in Abhängigkeit der mit dem ersten Temperatursensor (S1) messbaren Temperatur des Kühlfluids einstellbar ist.

6. Zylinderanordnung nach einem der vorangehenden Ansprüche, wobei der zweite Kühleingang (E2) über den Kühlkreislauf (100) mit der Kühlfluidzufuhr (5) zur Zufuhr von frischem Kühlfluid verbunden ist.

7. Zylinderanordnung nach einem der vorangehenden Ansprüche, wobei zwischen dem zweiten Kühleingang (E2) und der Kühlfluidzufuhr (5) eine Ausgleichsleitung (6) angeordnet ist, mit welcher eine zum ersten Kühleingang (E1) rezirkulierte Menge an Kühlfluid ausgleichbar ist.

8. Zylinderanordnung nach einem der vorrangehenden Ansprüche, wobei ein Laufbuchsenkühlsystem (21) in einer Zylinderwand der Zylinderlaufbuchse (2) und ein Deckelkühlsystem (31) im Zylinderdeckel (3) angeordnet sind.

9. Zylinderanordnung nach einem der vorrangehenden Ansprüche, wobei die Zirkulationspumpe (P1) eine Propellerpumpe oder eine Kreiselpumpe ist.

10. Zylinderanordnung nach einem der vorrangehenden Ansprüche, wobei das Kühlfluid Öl und/oder Wasser, insbesondere Seewasser und /oder Frischwasser und/oder Süsswasser ist.

11. Zylinderanordnung nach einem der vorangehenden Ansprüche, wobei der Kühlkreislauf (100) als ein geschlossener Kreislauf ausgestaltet ist und mit einem Rückkühlfluid, insbesondere Niedertemperaturkühlwasser, rückkühlbar ist.

12. Zylinderanordnung nach Anspruch 11, umfassend einen Wärmetauscher oder eine Mischvorrichtung zur Kühlung des Kühlfluids

13. Grossmotor umfassend eine Zylinderanordnung (1) nach einem der vorangehenden Ansprüche.

14. Grossmotor nach Anspruch 13 ausgestaltet als Dual-Fuel Grossdieselmotor.

15. Verfahren zur Kühlung eines Zylinders eines Grossmotors, welcher eine Zylinderanordnung (1) nach einem der Ansprüche 1-12 umfasst, wobei die rezirkulierbare Menge des Kühlfluids über das ansteuerbare Mischventil (V1) eingestellt wird.
